# EUROPÄISCHE PATENTSCHRIFT

(11) **EP 1 090 874 B1**
(45) Veröffentlichungstag und Bekanntmachung des Hinweises auf die Patenterteilung: **30.03.2005**
(21) Anmeldenummer: 00250332.4
(22) Anmeldetag: 06.10.2000
(51) Int. Cl.: B66C 23/62, B60K 6/04, B60K 1/04

(54) **Fahrzeugkran**
Mobile crane
Grue mobile

(30) Priorität: 06.10.1999 DE 19948831
(43) Veröffentlichungstag der Anmeldung: 11.04.2001
(73) Patentinhaber: Terex-Demag GmbH & Co. KG, 66482 Zweibrücken (DE)
(72) Erfinder: Stowasser, Walter, 66482 Zweibrücken (DE); Höhn, Hans-Jürgen, 67655 Kaiserslautern (DE); Fuhrmeister, Christian, 66424 Homberg (DE); Adner, Andric, 66497 Contwig (DE)
(74) Vertreter: Meissner, Peter E., Dipl.-Ing.

(56) Entgegenhaltungen:
- EP-A- 0 569 277
- EP-A- 0 921 094
- DE-A- 4 314 206
- DE-A- 4 427 322
- DE-A- 19 850 902
- DE-U- 9 302 376

## Beschreibung

Die Erfindung betrifft einen Fahrzeugkran mit einem angetriebenen Unterwagen und einem drehbar darauf angeordneten Oberwagen gemäß dem Oberbegriff des Patentanspruches 1. Ein derartiger Fahrzeugkran ist aus dem deutschen Giebrauchsmuster G-9 302 376.6 bekannt.

Kleine Fahrzeugkrane im Traglastenbereich gleich kleiner 100 t werden häufig auch in geschlossenen Hallen zum Heben von Maschinenteilen eingesetzt. Der dafür verwendete Fahrzeugkrantyp soll die Bedingung nach Kompaktheit, d. h. geringe Ausmaße, Wendigkeit, d. h. Befahren von engen Radien in der Halle und Emissionsarmut erfüllen. Letztgenannte Forderung gilt auch für den Einsatz in eng bebauten Stadtgebieten wie z. B. Fußgängerzone.

Bekannt sind Fahrzeugkrane mit einem konventionellen Antriebstrag, d. h. Dieselmotor, Automatikgetriebe, Verteilergetriebe, Kardanwellen. Dazu gehören auch Hydraulikpumpen, um die Kranarbeiten erledigen zu können. Nachteilig ist, daß die Anordnungsfreiheit der genannten Komponenten stark eingeschränkt ist. Während des Schaltens entstehen unvermeidlich Momentensprünge und instationäre Betriebszustände, die im wesentlichen den Schadstoffanteil im Abgas bestimmen.

Aufgabe der Erfindung ist es, einen Fahrzeugkran der gattungsmäßigen Art anzugeben, der eine hohe Anordnungsfreiheit für die Antriebskomponenten besitzt und schadstoffarm, möglichst schadstoffrei, betrieben werden kann.

Diese Aufgabe wird ausgehend vom Oberbegriff in Verbindung mit den kennzeichnenden Merkmalen des Patentanspruches 1 gelöst. Vorteilhafte Weiterbildungen sind jeweils Gegenstand von Unteransprüchen.

Nach einem weiteren Merkmal der Erfindung ist auch eine Kombination dieselelektrischer Antrieb und Batterie von Vorteil, wobei überwiegend der dieselelektrische Antrieb und die Batterie nur kurzzeitig für den Fahr- und Kranbetrieb genutzt werden. Eine weitere Variante besteht in der Anordnung eines Brennstoffzellensystems im Fahrzeugkran. Bei dieser Art von Energieversorgung fällt Wasser als Abfallprodukt an, so daß auch diese Variante als quasi schadstoffrei eingestuft werden kann. Vorzugsweise folgt der Räderantrieb direkt über elektrisch antreibbare Radnabenmotoren oder über einen an jeder Achse angeordneten Elektromotor. In besonderen Fällen kann es von Vorteil sein, nur einen Elektromotor vorzusehen und diesen über ein Verteilergetriebe und Gelenkwellen mit den Achsen zu verbinden. Durch den Wegfall der mechanischen Kopplung zwischen Dieselmotor und Rad ist eine große Anordnungsfreiheit für den Antriebsstrang gegeben. Vorzugsweise kann man die Freiheit dazu nutzen, den dieselelektrischen Antrieb in den hinteren Teil des Unterwagens anzuordnen und ihn somit als Gegengewicht zu nutzen. Das gleiche gilt auch für die Batterie bzw. das Brennstoffzellensystem, das im separaten Gegengewicht auf dem Oberwagen plaziert wird. Bei einer weiteren Anordnungsmöglichkeit werden der dieselelektrische Antrieb und die Batterie im Oberwagen als Teil des Gegengewichtes angeordnet.

Der elektrische Antrieb sorgt für einen ruckfreien Kranbetrieb und der Dieselmotor kann optimal ausgelegt werden, da er im günstigen Drehzahlbereich im Dauerbetrieb betrieben werden kann. Der Schadstoffausstoß sinkt dementsprechend. Außerdem ist vorgesehen, daß soweit die elektrische Infrastruktur in der Halle vorhanden ist, der dieselelektrische Antrieb nur für das Hineinfahren des Kranfahrzeuges in die Halle genutzt wird und in der Halle der Fahrzeugkran über Netzstecker an das elektrische Hallennetz angeschlossen wird, so daß die Kranarbeit emissionsfrei durchgeführt werden kann. Ein emissionsfreies Arbeiten ist auch möglich, wenn auf den dieselelektrischen Antrieb verzichtet und stattdessen eine leistungsstarke Batterie verwendet wird. Dies bedeutet, daß nicht nur die Kranarbeiten, sondern auch der Fahrbetrieb emissionsfrei erfolgt. Eine Wiederaufladung der Batterie ist über einen Netzsteckeranschluß möglich.

In der Zeichnung wird anhand eines Ausführungsbeispieles der erfindungsgemäß ausgebildete Fahrzeugkran näher erläutert. Es zeigen:
- Figur 1: in einer Längsansicht einen Fahrzeugkran der konventionellen Bauweise
- Figur 2: ein Schaltbild eines dieselelektrischen Antriebes
- Figur 3: in einer Längsansicht die Anordnung eines dieselelektrischen Antriebes in einem Fahrzeugkran

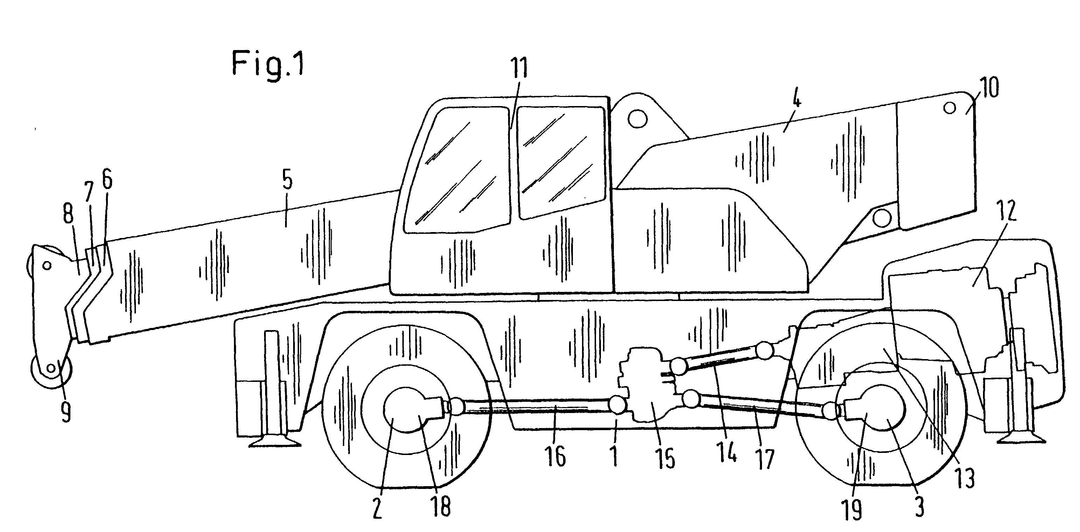

In Figur 1 ist in einer Längsansicht ein Fahrzeugkran der konventionellen Bauweise dargestellt. Er besteht aus einem Unterwagen 1 mit zwei Achsen 2, 3 und einem auf dem Unterwagen 1 drehbar angeordneten Oberwagen 4. Am Oberwagen 4 sind angeordnet ein Hauptausleger 5 mit hier drei teleskopierbaren Schüssen 6 - 8, wobei im Kopfbereich des innersten Teleskopschusses 8 ein Rollenkopf 9 zur Führung des hier nicht dargestellten Hubseiles angeordnet ist. Auf dem Oberwagen 4 sind weiterhin ein Gegengewicht 10 und eine Fahrerkabine 11 vorgesehen. Der Fahrantrieb besteht aus einem üblichen Dieselmotor 12, an dem ein Getriebe 13 angeflanscht ist. Das Getriebe 13 ist über eine Kardanwelle 14 mit einem Verteilergetriebe 15 verbunden. Vom Verteilergetriebe 15 aus erstrecken sich zwei Kardanwellen 16, 17 zu den in den Achsen 2, 3 angeordneten Kegelradgetrieben 18, 19.

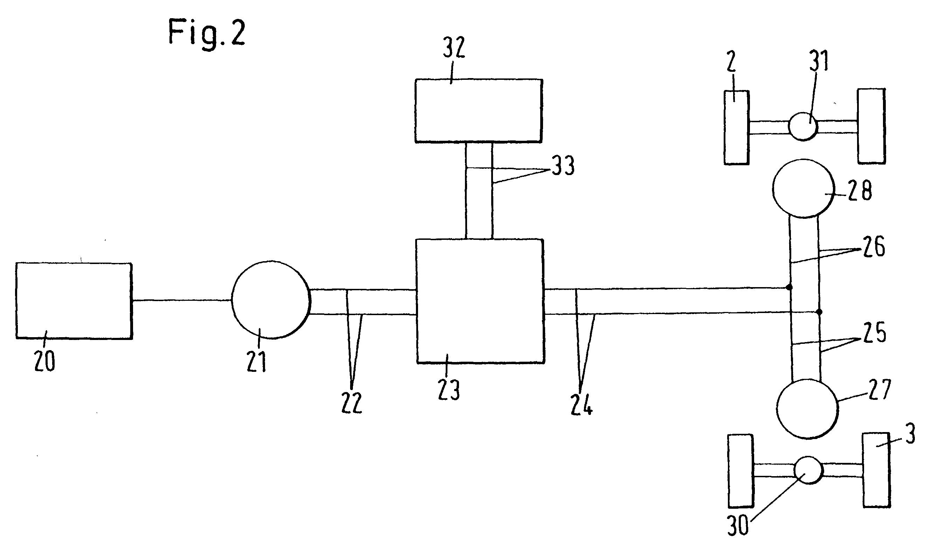

Figur 2 zeigt ein Schaltbild eines dieselelektrischen Antriebes. Es weist einen Dieselmotor 20 auf, der mechanisch mit einem Generator 21 verbunden ist. Der im Generator 21 erzeugte Strom wird über Kabel 22 einer Leistungselektronik 23 zugeführt, die den Strom über Kabel 24, 25, 26 weitedeitet an zwei Elektromotoren 27, 28. In diesem in Figur 2 dargestellten Beispiel ist für jede Achse 2, 3 ein Elektromotor vorgesehen, der mechanisch mit einem Ausgleichsgetriebe 30, 31 verbunden ist. Alternativ ist es auch möglich, in jedem Rad einen elektrisch antreibbaren Radnabenmotor anzuordnen und ihn über Kabel mit der Leistungselektronik 23 zu verbinden. Die Batterie 32 ist über Kabel 33 ebenfalls mit der Leistungselektronik 23 verbunden.

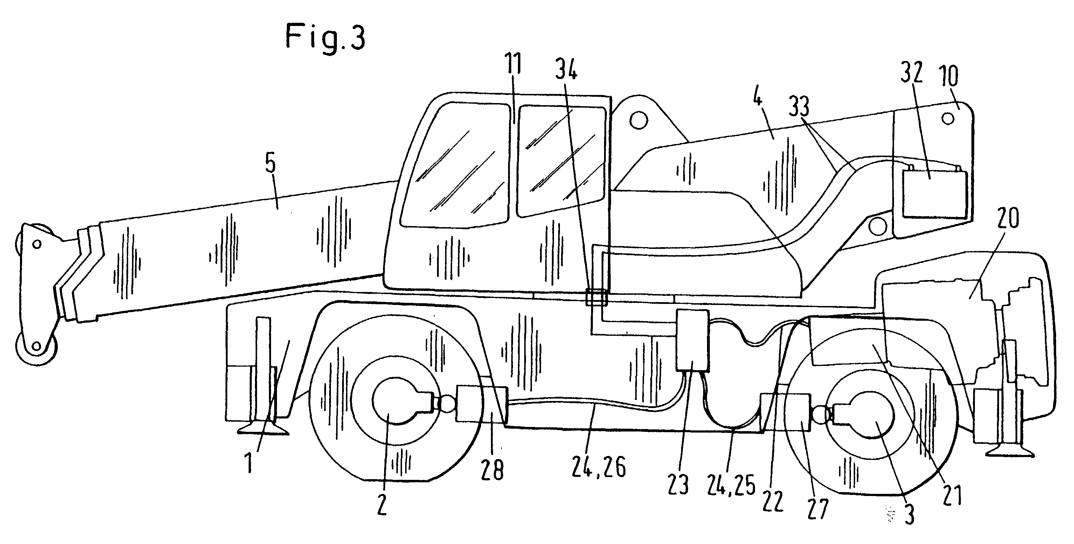

Figur 3 zeigt die Anordnung des in Figur 2 dargestellten dieselelektrischen Antriebes an einem Fahrzeugkran. Wesentlich dabei ist, daß sowohl die Batterie 32 als auch der dieselelektrische Antrieb bestehend aus Dieselmotor 20 und Generator 21 so angeordnet sind, daß sie einen Beitrag für das Gegengewicht leisten. Die Kabelzuführung 33 zwischen der im Unterwagen angeordneten Leistungselektronik 23 und der im Oberwagen angeordneten Batterie 32 erfolgt über eine hier nicht näher dargestellte Drehdurchführung 34.

## Patentansprüche

1. Fahrzeugkran mit einem Unterwagen mit Räderantrieb und einem drehbar darauf angeordneten Oberwagen, an dem ein Gegengewicht, ein wippbarer Hauptausleger und eine Fahrerkabine angeordnet sind, und dessen Fahr- und Kranbetrieb mittels mindestens eines Motors erfolgt, der als Elektromotor (27,28) ausgebildet ist, wobei die Stromquelle zur Energieversorgung für den Fahr- und Kranbetrieb Bestandteil der Gegengewichte des Fahrzeugkrans ist.

2. Fahrzeugkran nach Anspruch 1,
**dadurch gekennzeichnet,**
**dass** die Energieversorgung über einen dieselelektrischen Antrieb (20,21) und/oder Batterie (32), der bzw. die mittels Kabel (22,24,25,26, 33) mit dem / den Elektromotor (en) (27,28) verbindbar ist, oder über ein Brennstofftzellensystem erfolgt.

3. Fahrzeugkran nach Anspruch 2,
**dadurch gekennzeichnet,**
**daß** die Energieversorgung für den Fahr- und den Kranbetrieb überwiegend über den dieselelektrischen Antrieb (20,21) und kurzzeitig über die im Fahrzeugkran angebrachte Batterie (32) erfolgt.

4. Fahrzeugkran nach einem der Ansprüche 1 - 3,
**dadurch gekennzeichnet,**
**daß** jedes Rad einen elektrisch antreibbaren Radnabenmotor aufweist.

5. Fahrzeugkran nach einem der Ansprüche 1 - 3,
**dadurch gekennzeichnet,**
**daß** jede Achse einen Elektromotor (27,28) aufweist.

6. Fahrzeugkran nach einem der Ansprüche 1 - 3,
**dadurch gekennzeichnet,**
**daß** der Stromquelle nur ein Elektromotor nachgeschaltet ist, der über ein Verteilergetriebe und Gelenkwellen mit allen Achsen verbindbar ist.

7. Fahrzeugkran nach einem der Ansprüche 2 bis 6, **dadurch gekennzeichnet, daß** der dieselelektrische Antrieb (20,21) im hinteren Teil des Unterwagens (1) angebracht ist.

8. Fahrzeugkran nach Anspruch 2 bis 7,
**dadurch gekennzeichnet,**
**daß** der dieselelektrische Antrieb (20,21) und/oder das Brennstoffzellensystem im Oberwagen (4) als Teil des Gegengewichtes angeordnet sind.

9. Fahrzeugkran nach einem der Ansprüche 1 - 8,
**dadurch gekennzeichnet,**
**daß** eine Leistungselektronik (23) über Kabel (22,24-26,33) mit der Stromquelle und dem / den Elektrommotor(en) (27,28) verbunden ist.

10. Fahrzeugkran nach einem der Ansprüche 1 - 9,
**dadurch gekennzeichnet,**
**daß** die Energieversorgung für den Fahr- und Kranbetrieb zeitweilig über einen am Fahrzeugkran angebrachten Netzanschluß erfolgt.

## Claims

1. , A vehicle crane having a substructure with wheel drive and a superstructure located in rotatable manner thereon, on which a counterweight, a luffable main jib and an operator's cabin are arranged, and the travelling and crane operation of which takes place by means of at least one motor which is in the form of an electric motor (27, 28), the power source for supplying energy for the travelling and crane operation being a component of the counterweights of the vehicle crane.

2. A vehicle crane according to Claim 1, **characterised in that** the energy is supplied via a diesel-electric drive (20, 21) and/or battery (32), which can be connected by means of cables (22, 24, 25, 26, 33) to the electric motor(s) (27, 28), or via a fuel cell system.

3. A vehicle crane according to Claim 2, **characterised in that** the energy for the travelling and crane operation is supplied predominantly via the diesel-electric drive (20, 21) and briefly via the battery (32) provided in the vehicle crane.

4. A vehicle crane according to one of Claims 1 to 3, **characterised in that** each wheel has an electrically driveable hub motor.

5. A vehicle crane according to one of Claims 1 to 3, **characterised in that** each axle has an electric motor (27, 28).

6. A vehicle crane according to one of Claims 1 to 3, **characterised in that** the power source is succeeded by only one electric motor, which can be connected to all the axles via a splitter box and universal shafts.

7. A vehicle crane according to one of Claims 2 to 6, **characterised in that** the diesel-electric drive (20, 21) is provided in the rear part of the substructure (1 ).

8. A vehicle crane according to Claims 2 to 7, **characterised in that** the diesel-electric drive (20, 21) and/or the fuel cell system are located in the superstructure (4) as part of the counterweight.

9. A vehicle crane according to one of Claims 1 to 8, **characterised in that** power electronics (23) are connected via cables (22, 24-26, 33) to the power source and the electric motor(s) (27, 28).

10. A vehicle crane according to one of Claims 1 to 9, **characterised in that** the energy for the travelling and crane operation is supplied temporarily via a mains connection provided on the vehicle crane.

## Revendications

1. Grue-véhicule comportant un train avec entraînement à roues et un châssis tournant agencé dessus de façon rotative, sur laquelle sont agencés un contrepoids, une flèche principale pivotante et une cabine de conducteur, et dont le fonctionnement en véhicule et en grue a lieu au moyen d'au moins un moteur qui est conçu sous forme de moteur électrique (27, 28), la source de courant pour l'alimentation en énergie en vue du fonctionnement en véhicule et en grue faisant partie intégrante des contrepoids de la grue-véhicule.

2. Grue-véhicule selon la revendication 1, **caractérisée en ce que** l'alimentation en énergie a lieu par l'intermédiaire d'une commande diesel électrique (20, 21) et/ou d'une batterie (32) qui peut être reliée (ou qui peuvent être reliées) à l'aide de câbles (22, 24, 25, 26, 33) au/aux moteur(s) électrique(s) (27, 28), ou par l'intermédiaire d'un système de piles à combustible.

3. Grue-véhicule selon la revendication 2, **caractérisée en ce que** l'alimentation en énergie pour le fonctionnement en véhicule et en grue a essentiellement lieu par l'intermédiaire de la commande diesel électrique (20, 21) et, temporairement, par l'intermédiaire de la batterie (32) montée dans la grue-véhicule.

4. Grue-véhicule selon l'une des revendications 1 à 3, **caractérisée en ce que** chaque roue présente un moteur au moyeu de roue pouvant être commandé électriquement.

5. Grue-véhicule selon l'une des revendications 1 à 3, **caractérisée en ce que** chaque essieu présente un moteur électrique (27, 28).

6. Grue-véhicule selon l'une des revendications 1 à 3, **caractérisée en ce que** seul un moteur électrique est branché en aval de la source de courant, lequel peut être relié à tous les essieux par l'intermédiaire d'un engrenage distributeur et d'arbres de transmission.

7. Grue-véhicule selon l'une des revendications 2 à 6, **caractérisée en ce que** la commande diesel électrique (20, 21) est montée dans la partie arrière du train (1).

8. Grue-véhicule selon l'une des revendications 2 à 7, **caractérisée en ce que** la commande diesel électrique (20, 21) et/ou le système de piles à combustible est monté(e) (ou sont montés) dans le châssis tournant (4) en tant que partie du contrepoids.

9. Grue-véhicule selon l'une des revendications 1 à 8, **caractérisée en ce qu'**une électronique de puissance (23) est reliée par des câbles (22, 24-26, 33) à la source de courant et au/aux moteur(s) électrique(s) (27, 28).

10. Grue-véhicule selon l'une des revendications 1 à 9, **caractérisée en ce que** l'alimentation en énergie pour le fonctionnement en véhicule et en grue a lieu temporairement par l'intermédiaire d'un branchement sur secteur installé sur la grue-véhicule.
